(19) Europäisches Patentamt
European Patent Office
Office européen des brevets

(11) Publication number: **0 362 660 B1**

(12) **EUROPEAN PATENT SPECIFICATION**

(45) Date of publication of patent specification: **18.01.95**

(51) Int. Cl.6: **C08L 71/12**, //C08L23:00

(21) Application number: **89117665.3**

(22) Date of filing: **25.09.89**

(54) **Improved polyphenylene ether resin compositions which are highly resistant to delamination.**

(30) Priority: **06.10.88 US 254519**

(43) Date of publication of application:
**11.04.90 Bulletin 90/15**

(45) Publication of the grant of the patent:
**18.01.95 Bulletin 95/03**

(84) Designated Contracting States:
**DE ES FR GB IT NL**

(56) References cited:
**US-A- 4 584 334**

(73) Proprietor: **GENERAL ELECTRIC COMPANY**
**1 River Road**
**Schenectady**
**New York 12305 (US)**

(72) Inventor: **Lee, Gim Fun, Jr.**
**11 Drawbridge Drive**
**Albany, NY 12203 (US)**

(74) Representative: **Pratt, Richard Wilson et al**
**London Patent Operation**
**G.E. Technical Services Co. Inc.**
**Essex House**
**12/13 Essex Street**
**London WC2R 3AA (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.10/3.09/3.3.3)

## Description

This invention relates generally to novel and improved resinous compositions and methods for their preparation, and more particularly to polyphenylene ether compositions characterized by an unusual combination of physical and chemical properties.

Polyphenylene ethers(also known as PPO or PPE) are a well-known class of engineering resins which exhibit excellent hydrolytic stability, dimensional stability, toughness, heat resistance, and dielectric properties.

PPE-based compositions exhibit some disadvantages under certain processing and use conditions. For example, some of these compositions do not have good flame resistance. Moreover, molded PPE parts can be somewhat brittle due to low impact strength. Furthermore, most of the high-performance PPE resins are of fairly high molecular weight, and are thus characterized by high melt viscosities, and softening points greater than about 275°C. While these properties do not adversely affect solution-processing techniques, they can cause problems in commercial melt processing. For example, the high temperatures which are necessary to soften the resin during melt processing can also cause instability and discoloration.

Some of the undesirable characteristics of PPE compositions are minimized by the addition of polyolefins such as polyethylene to PPE compositions. The polyolefins function as lubricity agents and/or impact modifiers, and are known to improve physical properties of the compositions when used at relatively low levels, eg., less than about 2% of the weight of the resin.

Unfortunately, the amount of polyolefin which can be incorporated into PPE materials has been generally limited to about 2% by weight of the resin, since higher levels often cause excessive delamination of molded articles made therefrom. The delamination can manifest itself as blisters or as highly visible layers of material which separate from each other under high shear conditions such as injection molding, or upon shock or impact. Delamination is apparently caused by incompatibility between PPE and the polyolefin materials. In addition to sometimes decreasing the visual quality of the molded part, delamination can sometimes result in the degradation of other properties, such as tensile elongation and impact resistance.

In U.S. Patent 4,166,055, G.F. Lee, Jr. describes a novel method of incorporating high levels of polyolefin, eg., greater than about 5% by weight, into PPE compositions. That method involves the use of a combination of the olefin with certain types of elastomeric block copolymers.

There is still, however, a desire to incorporate relatively high levels of polyolefins by other methods as well; eg., methods which are not dependent on the use of specific elastomeric block copolymers.

It is, therefore, a primary object of the present invention to provide PPE-based compositions which are characterized by a significantly reduced tendency to delaminate.

It is another object of the present invention to provide PPE-based compositions having excellent flame retardancy, as well as good impact strength.

It is yet another object of this invention to provide a PPE composition which can accommodate relatively large amounts of polyolefins without adversely affecting other properties.

An additional object of this invention is to provide a method for lowering the delamination tendencies in PPE compositions which also contain polyolefins.

### Summary of the Invention

The above objects are achieved by the discovery of a thermoplastic composition comprising

(a) a polyphenylene ether resin, optionally in combination with at least one unmodified vinyl aromatic polymer, and

(b) at least one polyolefin resin having a melt index of less than about 5 grams/10 minutes.

In preferred embodiments, the polyolefin component is an ethylene copolymer such as the type usually referred to as linear low density polyethylene. Compositions of this invention can further include an elastomeric block copolymer.

### Detailed Description of the Invention

The polyphenylene ether resins useful for the present invention are in general well-known and readily available. Both homopolymer and copolymer polyphenylene ethers are within the scope of this invention.

The preferred PPE resins are homo- and copolymers of the formula

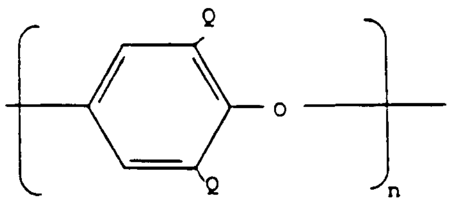

I

wherein the oxygen ether atom of one unit is connected to the benzene nucleus of the next adjoining unit; n is an integer of at least 50; and each Q is a monovalent substituent such as hydrogen, halogen, hydrocarbon groups, halohydrocarbon groups having at least two carbon atoms between the halogen atom and the phenyl nucleus, hydrocarbonoxy groups, and halohydrocarbonoxy groups having at least two carbon atoms between the halogen atom and the phenyl nucleus. In preferred embodiments, each Q is an alkyl group having from 1-4 carbon atoms, such as methyl, ethyl, propyl, and the like. In terms of availability and suitability for a wide range of end uses, poly-(2,6-dimethyl-1, 4-phenylene) ether is the preferred PPE resin.

The preparation of PPE resins is well-known in the art and is described, for example, in U.S. Patents 3,306,874; 3,306,875; and 3,432,469 of Allan Hay; and U.S. patents 3,257,357 and 3,257,358 of Gelu Stamatoff.

In some embodiments of this invention, the PPE resin may be used in combination with at least one unmodified vinyl aromatic polymer. "Unmodified" as used herein signifies that the vinyl aromatic polymer is not combined or reacted with any rubbery component, such as a diene hydrocarbon. Thus, the use of high impact polystyrene (HIPS) is outside the scope of this invention, in part because rubber-modified materials of this type can significantly increase the flammability of the composition and articles made therefrom.

Vinyl aromatic compounds are known in the art and described, for example, in U.S. Patents 3,383,435; 4,593,058, and 4,661,560,

Exemplary vinyl aromatic compounds suitable for this invention have the formula

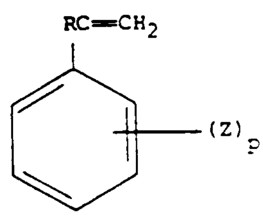

II

wherein R is hydrogen, an alkyl group of 1 to 4 carbon atoms, or halogen; Z is a member selected from the group consisting of vinyl, hydrogen, halogen, and an alkyl group of from 1-8 carbon atoms; and p is from 0-5.

Examples of specific vinyl aromatic compounds are polystyrene, polychlorostyrene, and polyvinyl toluene, as well as styrene containing copolymers such as styrene-acrylonitrile copolymers (SAN), styrene-maleic anhydride copolymers, polyalpha-methylstyrene, copolymers of ethylvinylbenzene and divinylbenzene, and the like.

Usually, the PPE resin will contain about 5-50% (by weight) of the vinyl aromatic polymer, if any. In preferred embodiments which contain the vinyl aromatic polymer, the polymer is polystyrene homopolymer.

Preparation of the vinyl aromatic polymer is also known in the art; exemplary methods are bulk, suspension, and emulsion polymerization.

As mentioned above, compositions of this invention further comprise at least one polyolefin resin. Polyolefin resins are generally known in the art and are described, for example, in the above-mentioned U.S. patent 4,166,055, in European Patent 0,095,098, and on page 836 of The Condensed Chemical Dictionary, Tenth Edition, Van Nostrand Reinhold Company.

Homo- or copolymers of polyolefins may be used. Exemplary homopolymers include polyethylene, polypropylene, polyisobutylene, and the like, with the preferred homopolymer being polyethylene.

In the most preferred embodiments, the polyolefin component of this invention is an ethylene copolymer comprising about

(A) 70% to 99% by weight of ethylene, and

(B) 1% to 30% by weight of another olefin.

The olefin of component (B) is preferably an alpha olefin such as propylene, 1-butene, 1-hexene, 4-methylpentene-1, 1-octene, and mixtures thereof.

Many of the ethylene copolymer materials suitable as the polyolefin component of this invention are often characterized as linear low density polyethylene(LLDPE) copolymers,which are described in U.S. Patent 4,584,334 of G.F. Lee, Jr. and S.P. Ting. These materials may be prepared from procedures described in European Patent Application Number 4,645, as well as U.S. Patent 4,076,698 of A. Anderson and G. Stamatoff. The LLDPE copolymers are often characterized by a density between about 0.89 and 0.96 grams/cc, and a controlled concentration of simple side chain branching which distinguishes them from other polyolefins such as high pressure-low density polyethylene and high density polyethylene prepared with Ziegler catalyst systems. Many of the LLDPE copolymers can be made by the Unipol process which is described in Chem.Eng., December 3, 1979, pp. 80-85.

In preferred embodiments, the ethylene copolymer has a density of less than about 0.97 grams/$cm^3$, and most preferably less than about 0.95 grams/$cm^3$. A typical density range for preferred embodiments of this invention is about 0.91 to about 0.95 grams/$cm^3$.

The polyolefin component is usually present in compositions of this invention in an amount of at least about 2% by weight, based on the weight of the PPE-based component, i.e., the weight of PPE, unmodified vinyl aromatic material, and any flame retardants or stabilizers which are used. In compositions which require high levels of impact strength and solvent resistance, the preferred polyolefin level is at least about 5% by weight.

As mentioned above, a key feature of the polyolefin resins of the present invention is their low melt index value. The melt index values for the present invention have been determined according to ASTM Test Method D1238, and were determined under a load of 2.16 kilograms at a polymer temperature of about 190 °C, utilizing a specified die orifice diameter and piston pressure according to the test procedure.

The polyolefins of this invention must have a melt index low enough to effectively decrease the delamination characteristics of articles molded from the compositions. This melt index value is less than about 5 grams/10 minutes (i.e. 5 g/10 min). In preferred embodiments of this invention, the melt index of the polyolefin resin is less than or equal to about 2.5 g/10 min.

The compositions of this invention may further comprise an elastomeric block copolymer. Such materials are well-known in the art and described, for example, in U.S. patent 4,080,356 of Gergen et al., U.S. patents 4,166,055 and 4,584,334, and in European Patent 0,095,098. Examples of commercially available block copolymers are the Kraton® series of polymers, available from Shell Oil Company.

Preferred block copolymers for the present invention are characterized by an A-B, A-B-A′, or $(A\text{-}B)_m\text{-}X$ structure, or mixtures of these structures, wherein A and A′ are each polymerized vinyl aromatic hydrocarbon blocks, each B is a hydrogenated or non-hydrogenated block derived from a polymerized conjugated diene, X is the radical of a multifunctional coupling agent, and m is an integer of at least 2. The block polymers preferably contain between about 15 and 50% by weight of vinyl aromatics.

In especially preferred embodiments, A and A′ are independently selected from the group consisting of styrene, alpha-methyl styrene, vinyl toluene, vinyl xylene, and vinyl napthalene; and B is selected from the group consisting of butadiene, isoprene, 1,3-pentadiene, and 2,3-dimethyl butadiene.

Each block A and A′ usually has a molecular weight in the range of about 2000 to 100,000, while each block B usually has a molecular weight in the range of about 25,000 to 1,000,000.

The preparation of elastomeric block copolymers is known in the art and can be effected, for example, by successive polymerization of the monomers in solution in the presence of a monolithium hydrocarbon initiator.

Furthermore, the olefinic double bonds of the block copolymers can be selectively hydrogenated in any conventional manner, e.g., the use of molecular hydrogen and catalysts based on metals or salts of metals of group VIII of the Periodic Table. Further aspects of the preparation of the elastomeric block copolymers can be found in European Patent 0,095,098, in U.S. Patents 3,113,986 and 3,700,633, in German Public Disclosure 1,222,260, and in German Letters of Disclosure 2,013,263.

The compositions of this invention may also contain a wide variety of other additives, depending in part on contemplated product end use. Examples of these additives include flame retardants, plasticizers, reinforcing agents such as fibrous glass and graphite whiskers, antioxidants, mold release agents, mineral fillers, pigments, dyes and abrasion resistant compounds. These additives are usually included in minor but effective amounts of between about 1% and 50% by weight of the total composition.

One particularly useful additive is a plasticizer such as an aromatic phosphate compound. Preferred aromatic phosphate compounds are isopropylated triphenyl phosphate, sold by the FMC Corporation under the name Kronitex® 50; isobutylated triphenyl phoshate,and triphenyl phosphate. The aromatic phosphates are usually used at up to about 25% by weight of the composition.

Preparation of the compositions of this invention generally conforms to well-known practices. Preferably, the ingredients are combined as a pre-mix blend, and then extruded on a single or twin screw extruder, cooled and chopped into pellets. The pellets are then molded into articles of a desired shape and size.

Another aspect of this invention is a method of increasing the delamination resistance of a polyphenylene ether composition which also contains at least one polyolefin resin. The key step of this method involves decreasing the melt index of the polyolefin resin to less than about 5 grams/10 minutes. In preferred embodiments of this method, the melt index is decreased to less than about 2.5 grams/10 minutes.

The following examples are provided to illustrate various embodiments of this invention. It is to be understood, however, that the embodiments are given for the purpose of illustration only.

## Examples

The following materials were used in the Examples:

**Polyphenylene Ether (PPE):** A poly(2,6 dimethyl-1,4-phenylene) ether resin having a number average molecular weight of about 20,000, and an intrinsic viscosity in chloroform at 25°C of 0.46 dl/g.

**Block Copolymer:** An A-B-A triblock polymer of styrene-ethylene butylene-styrene, available as Kraton® G1651 from Shell Chemical Company.

**Polyethylene:** MN 722, having a melt index (MI) of 6 g/10 min., a density of 0.92, available from USI Chemicals Incorporated.

**Linear Low Density Polyethylene (LLDPE):** Four grades of Union Carbide's product line, each containing ethylene-butene, were used:

| Grade | Melt Index |
|---|---|
| GR-8320 | 20.0 g/10 min. |
| GR-7341 | 0.8 g/10 min. |
| GR-7047 | 1.0 g/10 min. |
| GR-7042 | 2.0 g/10 min. |

Two LLDPE's from Exxon Chemical Company were employed:

| Grade | Melt Index |
|---|---|
| LL-1001.09 | 1.0 g/10 min. |
| LL-6301.07 | 5.0 g/10 min. |

Other components used are indicated in Tables I and III.

The delamination characteristics were observed by subjecting test pieces to a puncture test, ASTM D 3763. In this test, 3,2 mm (1/8") thick test pieces of compositions of this invention were impacted with the use of a Dynatup® drop dart impacter, according to D 3763 standards. The fracture surface formed at impact was then visually evaluated and graded, as shown in Table II.

Tensile elongation (TE) was generally determined according to ASTM D638.

## Example 1

The compositions set out in Table I were prepared in accordance with the present invention. The PPE resin, the block copolymer, and each of the other components were dry blended and compounded using a 30 mm Werner & Pfleiderer twin-screw extruder.

The extrudate was quenched and pelletized. The thermoplastic products were then molded on a Toshiba injection molding machine (8 oz., 227 g, barrel capacity) into various test specimens. Relevent physical properties are reported in Table II.

The components are given as parts by weight, unless otherwise indicated.

In tables I and II, samples 1 and 2 are controls outside the scope of this invention while samples 3-5 represent the present invention.

Table I

| Sample No. | PPE | F.R./Plasticizer(a) | Polyethylene | Amount of Polyethylene | M.I. of Polyethylene | Kraton(b) G 1651 | TDP(c) | ZNS(d) | ZNO(e) |
|---|---|---|---|---|---|---|---|---|---|
| 1* | 82 | 18 | MN722 | 16 | 6 | 8 | 0.6 | 0.2 | 0.2 |
| 2* | 82 | 18 | GR-8320 | 16 | 20 | 8 | 0.6 | 0.2 | 0.2 |
| 3 | 82 | 18 | GR-7341 | 16 | 0.8 | 8 | 0.6 | 0.2 | 0.2 |
| 4 | 82 | 18 | GR-7047 | 16 | 1.0 | 8 | 0.6 | 0.2 | 0.2 |
| 5 | 82 | 18 | GR-7042 | 16 | 2.0 | 8 | 0.6 | 0.2 | 0.2 |

(a) Flame Retardant/Plasticizer: Santicizer® From Monsanto (isobutylated triphenyl phosphate)

(b) Triblock Copolymer

(c) Tridecyl phosphite

(d) Zinc Sulfide

(e) Zinc Oxide

* Control Samples

Table II

| Sample Number | Melt Index of Polyethylene | Tensile Elongation(%) | Flammability(a) | Delamination(b) Rating |
|---|---|---|---|---|
| 1* | 6 | 21 | V-0, 3.2 | P |
| 2* | 20 | 18 | V-0, 4.3 | P |
| 3 | 0.8 | 68 | V-0, 2.4 | G |
| 4 | 1.0 | 53 | V-0, 2.1 | G |
| 5 | 2.0 | 76 | V-0, 3.2 | G |

* Control Samples

(a) UL94 Test, Avg. Flame-Out time in Seconds

(b) G = Good: Very little layer separation is visible

P = Poor: Significant Amount of Layer Separation Over Most of the Fracture Surface

Table II demonstrates that decreasing the melt index of the polyolefin component results in a significant decrease in the delamination tendency, while also resulting in large increases in tensile elongation. Furthermore, other properties of materials of this invention, such as heat distortion temperature (HDT), tensile strength, and impact strength, were not adversely affected by the decrease in melt index of the polyethylene.

Moreover, the compositions exhibit excellent flame retardancy.

## Example 2

The same materials as in Example 1 were used herein, with samples 11 and 12 utilizing two other LLDPE materials, Exxon LL-1001.09 and Exxon LL-6301.07, respectively. The components are listed in Table III, and the results are provided in Table IV.

Samples 6,7 and 12 were outside the scope of the present invention, while samples 8-11 represent the present invention.

### Table III

| Sample No. | PPE | F.R./ Plasticizer[(a)] | Polyethylene | Amount of Polyethylene | M.I. of Polyethylene | Kraton[(b)] G 1651 | TDP[(c)] | ZNS[(d)] | ZNO[(e)] |
|---|---|---|---|---|---|---|---|---|---|
| 6 | 82 | 18 | MN722 | 16 | 6 | 8 | 0.6 | 0.2 | 0.2 |
| 7 | 82 | 18 | LLDPE GR-8320 | 16 | 20 | 8 | 0.6 | 0.2 | 0.2 |
| 8 | 82 | 18 | LLDPE GR-7341 | 16 | 0.8 | 8 | 0.6 | 0.2 | 0.2 |
| 9 | 82 | 18 | LLDPE GR-7047 | 16 | 1.0 | 8 | 0.6 | 0.2 | 0.2 |
| 10 | 82 | 18 | LLDPE GR-7042 | 16 | 2.0 | 8 | 0.6 | 0.2 | 0.2 |
| 11 | 82 | 18 | LL-1001.09 | 16 | 1.0 | 8 | 0.6 | 0.2 | 0.2 |
| 12 | 82 | 18 | LL-6301.07 | 16 | 5.0 | 8 | 0.6 | 0.2 | 0.2 |

(a) Flame Retardant/Plasticizer: Santicizer® From Monsanto isobutylated triphenyl phsophate

(b) Triblock Copolymer

(c) Tridecyl Phosphite

(d) Zinc Sulfide

(e) Zinc Oxide

Table IV

| Sample Number | Melt Index of Polyethylene | Tensile Elongation(%) | Flammability[(a)] | Delamination[(b)] Rating |
|---|---|---|---|---|
| 6* | 6 | 28 | V-0, 3.7 | P |
| 7* | 20 | 22 | V-0, 3.4 | P |
| 8 | 0.8 | 28 | V-0, 4.0 | G |
| 9 | 1.0 | 66 | V-1, 4.9 | G |
| 10 | 2.0 | 67 | V-1, 4.6 | G |
| 11 | 1.0 | 51 | V-0, 4.3 | G |
| 12* | 5.0 | 78 | V-0, 2.8 | P |

* Control Samples
(a) UL94 Test, Flame-Out time in Seconds
(b) G = Good: Very little layer separation is visible
P = Poor: Significant Amount of Layer Separation Over Most of the Fracture Surface

The data in Table IV demonstrate that compositions having a low melt index value for the polyethylene component exhibit very good resistance to delamination, in contrast to compositions having a high polyethylene melt index.

Furthermore, it is also evident that compositions of this invention, which purposefully exclude the use of any high impact polystyrene, exhibit excellent flame retardant properties.

The tensile elongation of sample 8 was not as high as the value for sample 3 of Example 1. This may have been due to the fact that the polyethylene material GR-7341, which is supplied in the form of a pellet, did not disperse well during the preparation of sample 8. The tensile elongation value for sample 12 was higher than most of the compositions which use high melt index values. In general, though, tensile elongation is much improved with the use of compositions of this invention. Furthermore, other properties such as heat distortion temperature (HDT), tensile strength, and impact strength, are maintained at desirable levels, even in the presence of the low melt index polyethylene.

## Claims

**1.** A thermoplastic composition comprising
(a) a polyphenylene ether resin, optionally in combination with at least one unmodified vinyl aromatic polymer, and
(b) at least one polyolefin resin having a melt index of less than about 5 grams/10 minutes.

**2.** The composition of claim 1 wherein component (b) is present in an amount of at least about 2% by weight, based on the weight of component (a).

**3.** The composition of claim 2 wherein component (b) is present in an amount of at least about 5% by weight, based on the weight of component (a).

**4.** The composition of claim 1 wherein the melt index of component (b) is less than or equal to about 2.5 grams/10 minutes.

**5.** The composition of claim 1 wherein component (b) is an ethylene copolymer comprising about
(A) 70% to 99% by weight of ethylene, and
(B) 1% to 30% by weight of another olefin.

**6.** The composition of claim 5 wherein the olefin of component (B) is selected from the group consisting of propylene, 1-butene, 1-hexene, 4-methylpentene-1, 1-octene, and mixtures thereof.

**7.** The composition of claim 5 wherein the ethylene copolymer has a density of less than about 0.97 $g/cm^3$.

**8.** The composition of claim 7 wherein the ethylene copolymer has a density less than about 0.95 $g/cm^3$.

**9.** The composition of claim 8 wherein the density of the ethylene copolymer is in the range of about 0.91-0.95 g/cm$^3$.

**10.** The composition of claim 1 wherein component (b) is linear low density polyethylene.

**11.** The composition of claim 1 wherein component (b) is an ethylene homopolymer.

**12.** The composition of claim 1 wherein the polypheny-lene ether has the formula

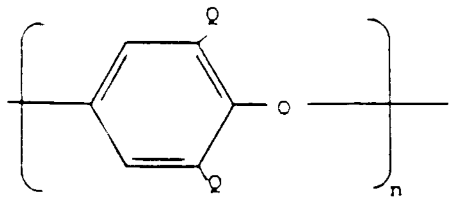

wherein the oxygen ether atom of one unit is connected to the benzene nucleus of the next adjoining unit; n is an integer of at least 50; and each Q is a monovalent substituent selected from the group consisting of hydrogen, halogen, hydrocarbon groups, halohydrocarbon groups having at least two carbon atoms between the halogen atom and the phenyl nucleus, hydrocarbonoxy groups, and halohydrocarbonoxy groups having at least two carbon atoms between the halogen atom and the phenyl nucleus.

**13.** The composition of claim 12 wherein each Q is an alkyl group having from 1 to 4 carbon atoms.

**14.** The composition of claim 13 wherein the polypheny- lene ether resin is poly(2,6-dimethyl-1,4-phenylene) ether.

**15.** The composition of claim 1 wherein the vinyl aromatic polymer is a styrene homopolymer.

**16.** The composition of claim 1 further comprising an elastomeric block copolymer.

**17.** The composition of claim 16 wherein the elastomeric block copolymer is characterized by an A-B, A-B-A′, or $(A\text{-}B)_m$-X structure, or mixtures of these structures, and A and A′ are each polymerized vinyl aromatic hydrocarbon blocks, each B is a hydrogenated or non-hydrogenated block derived from a polymerized conjugated diene, X is the radical of a multifunctional coupling agent, and m is an integer of at least about 2.

**18.** The composition of claim 17 wherein A and A′ are independently selected from the group consisting of styrene, alpha-methyl styrene, vinyl toluene, vinyl xylene, and vinyl napthalene; and B is selected from the group consisting of butadiene, isoprene, 1,3-pentadiene, and 2,3-dimethyl butadiene.

**19.** The composition of claim 18 wherein each block A and A' independently has a molecular weight in the range of about 2000 to 100,000, and each block B has a molecular weight in the range of about 25,000 to 1,000,000.

**20.** The composition of claim 1 further including up to about 25% by weight of a plasticizer.

**21.** The composition of claim 20 wherein the plasticizer is an aromatic phosphate.

**22.** The composition of claim 21 wherein the aromatic phosphate is selected from the group consisting of isopropylated triphenyl phosphate, isobutylated triphenyl phosphate, and triphenyl phosphate.

**23.** The composition of claim 1 further comprising a reinforcing amount of fibrous glass.

## Patentansprüche

1. Thermoplastische Zusammensetzung, enthaltend:
   (a) ein Polyphenylenätherharz, fakultativ in Kombination mit Wenigstens einem unmodifizierten vinylaromatischen Polymeren und
   (b) Wenigstens ein Polyolefinharz mit einem Schmelzindex von weniger als etwa 5 Gramm/10 Minuten.

2. Zusammensetzung nach Anspruch 1, worin die Komponente (b) in einer Menge von wenigstens etwa 2 Gew.-%, bezogen auf das Gewicht der Komponente (a), vorhanden ist.

3. Zusammensetzung nach Anspruch 2, worin die Komponente (b) in einer Menge von wenigstens etwa 5 Gew.-%, bezogen auf das Gewicht der Komponente (a), vorhanden ist.

4. Zusammensetzung nach Anspruch 1, worin der Schmelzindex der Komponente (b) geringer als oder gleich etwa 2,5 Gramm/10 Minuten ist.

5. Zusammensetzung nach Anspruch 1, worin die Komponente (b) ein Ethylen-Copolymer ist, enthaltend etwa
   (A) 70 bis 99 Gew.-% Ethylen und
   (B) 1 bis 30 Gew.-% eines anderen Olefins.

6. Zusammensetzung nach Anspruch 5, worin die Olefin-Komponente (B) ausgewählt ist aus der Gruppe, bestehend aus Propylen, 1-Buten, 1-Hexen, 4-Methylpenten-1, 1-Octen, und Mischungen derselben.

7. Zusammensetzung nach Anspruch 5, worin das Ethylen-Copolymere eine Dichte von weniger als etwa 0,97 g/cm$^3$ aufweist.

8. Zusammensetzung nach Anspruch 7, worin das Ethylen-Copolymere eine Dichte von weniger als etwa 0,95 g/cm$^3$ aufweist.

9. Zusammensetzung nach Anspruch 8, worin die Dichte des Ethylen-Copolymeren im Bereich von etwa 0,91 bis 0,95 g/cm$^3$ liegt.

10. Zusammensetzung nach Anspruch 1, worin die Komponente (b) lineares Polyethylen niederer Dichte ist.

11. Zusammensetzung nach Anspruch 1, worin die Komponente (b) ein Ethylen-Homopolymer ist.

12. Zusammensetzung nach Anspruch 1, worin der Polyphenylenäther die Formel

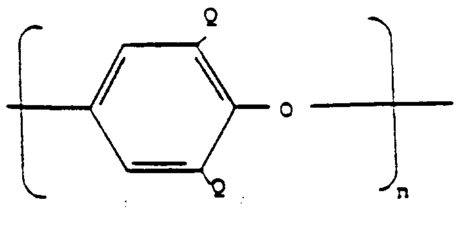

aufweist, worin das Äther-Sauerstoffatom einer Einheit mit dem Benzolkern der nächsten benachbarten Einheit verbunden ist; n eine ganze Zahl von wenigstens 50 ist, und jedes Q ein einwertiger Substituent ist, ausgewählt aus der Gruppe bestehend aus Wasserstoff, Halogen, Kohlenwasserstoffgruppen, Cyclokohlenwasserstoffgruppen mit wenigstens zwei Kohlenstoffatomen zwischen dem Halogenatom und dem Phenylkern, Hydrocarbonoxygruppen und Halogenhydrocarbonoxygruppen mit wenigstens zwei Kohlenstoffatomen zwischen dem Halogenatom und dem Phenylkern.

**13.** Zusammensetzung nach Anspruch 12, worin jedes Q eine Alkylgruppe mit 1 bis 4 Kohlenstoffatomen ist.

**14.** Zusammensetzung nach Anspruch 13, Worin das Polyphenylenätherharz Poly(2,6-dimethyl-1,4-phenylen)-äther ist.

**15.** Zusammensetzung nach Anspruch 1, worin das vinylaromatische Polymer ein Styrol-Homopolymer ist.

**16.** Zusammensetzung nach Anspruch 1, die weiterhin ein elastomeres Blockcopolymer enthält.

**17.** Zusammensetzung nach Anspruch 16, worin das elastomere Blockcopolymer gekennzeichnet ist durch eine A-B, A-B-A' oder $(A\text{-}B)_m\text{-}X$ Struktur, oder Mischungen dieser Strukturen, und A und A' jeweils polymerisierte vinylaromatische Kohlenwasserstoffblöcke darstellen, wobei jedes B ein hydrierter oder nichthydrierter Block ist, der von einem polymerisierten konjugierten Dien abgeleitet ist, X der Rest eines multifunktionellen Kupplungsmittels darstellt und m eine ganze Zahl von wenigstens etwa 2 ist.

**18.** Zusammensetzung nach Anspruch 17, worin A und A' unabhängig ausgewählt sind aus der Gruppe, bestehend aus Styrol, Alpha-Methylstyrol, Vinyltoluol, Vinylxylol, Vinylnaphthalin; und B ausgewählt ist aus der Gruppe, bestehend aus Butadien, Isopren, 1,3-Pentadien und 2,3-Dimethylbutadien.

**19.** Zusammensetzung nach Anspruch 18, worin jeder Block A und A' unabhängig ein Molekulargewicht im Bereich von etwa 2000 bis 100000 und jeder Block B ein Molekulargewicht im Bereich von etwa 25000 bis 1000000 aufweisen.

**20.** Zusammensetzung nach Anspruch 1, die weiterhin bis zu etwa 25 Gew.-% eines Weichmachers enthält.

**21.** Zusammensetzung nach Anspruch 20, worin der Weichmacher ein aromatisches Phosphat ist.

**22.** Zusammensetzung nach Anspruch 21, worin das aromatische Phosphat ausgewählt ist aus der Gruppe, bestehend aus isopropyliertem Triphenylphosphat, isobutyliertem Triphenylphosphat und Triphenylphosphat.

**23.** Zusammensetzung nach Anspruch 1, die weiterhin eine verstärkende Menge aus fasrigem Glas umfaßt.

## Revendications

**1.** Composition thermoplastique comportant :
a) une résine de poly(phénylène éther), éventuellement combinée avec au moins un polymère poly-(vinyl-aromatique) non modifié, et
b) au moins une résine de polyoléfine dont l'indice de fluidité à chaud est inférieur à environ 5 grammes/10 minutes.

**2.** Composition conforme à la revendication 1, dans laquelle le composant (b) se trouve en une proportion valant au moins environ 2 % en poids, par rapport au poids du composant (a).

**3.** Composition conforme à la revendication 2, dans laquelle le composant (b) se trouve en une proportion valant au moins environ 5 % en poids, par rapport au poids du composant (a).

**4.** Composition conforme à la revendication 1, dans laquelle l'indice de fluidité à chaud du composant (b) est inférieur ou égal à environ 2,5 grammes/10 minutes.

**5.** Composition conforme à la revendication 1, dans laquelle le composant (b) est un copolymère d'éthylène constitué d'environ
A) 70 % à 99 % en poids d'éthylène, et
B) 1 % à 30 % en poids d'une autre oléfine.

**6.** Composition conforme à la revendication 5, dans laquelle l'oléfine qui est le constituant (B) est choisie dans l'ensemble constitué par le propylène, le 1-butène, le 1-hexène, le 4-méthyl-pentène-1, le 1-octène et leurs mélanges.

**7.** Composition conforme à la revendication 5, dans laquelle la densité du copolymère d'éthylène vaut moins d'environ 0,97 g/$cm^3$.

**8.** Composition conforme à la revendication 7, dans laquelle la densité du copolymère d'éthylène vaut moins d'environ 0,95 g/$cm^3$.

**9.** Composition conforme à la revendication 8, dans laquelle la densité du copolymère d'éthylène se trouve dans l'intervalle allant d'environ 0,91 g/$cm^3$ à environ 0,95 g/$cm^3$.

**10.** Composition conforme à la revendication 1, dans laquelle le composant (b) est un polyéthylène basse densité linéaire.

**11.** Composition conforme à la revendication 1, dans laquelle le composant (b) est un homopolymère de l'éthylène.

**12.** Composition conforme à la revendication 1, dans laquelle le poly(phénylène éther) présente la formule :

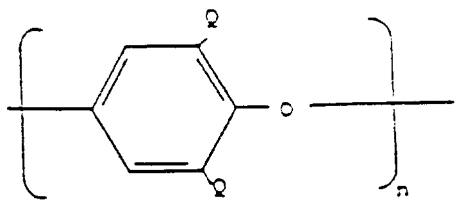

dans laquelle l'atome d'oxygène en fonction éther d'un motif est lié au noyau benzénique du motif adjacent suivant, n représente un nombre entier valant au moins 50, et chacun des symboles Q représente un substituant monovalent choisi dans l'ensemble que constituent les atomes d'hydrogène et d'halogène et les groupes hydrocarbonés, halogénohydrocarbonés comportant au moins deux atomes de carbone entre l'atome d'halogène et le noyau phényle, hydrocarboné-oxy et halogénohydrocarboné-oxy comportant au moins deux atomes de carbone entre l'atome d'halogène et le noyau phényle.

**13.** Composition conforme à la revendication 12, dans laquelle chaque symbole Q représente un groupe alkyle comportant de 1 à 4 atomes de carbone.

**14.** Composition conforme à la revendication 13, dans laquelle la résine de poly(phénylène éther) est un poly(2,6-diméthyl-1,4-phénylène éther).

**15.** Composition conforme à la revendication 1, dans laquelle le polymère poly(vinyl-aromatique) est un homopolymère de styrène.

**16.** Composition conforme à la revendication 1, qui comporte en outre un copolymère séquencé élastomère.

**17.** Composition conforme à la revendication 16, dans laquelle le copolymère séquencé élastomère est caractérisé par une structure A-B, A-B-A' ou $(A-B)_m$-X, ou une combinaison de ces structures, où A et A' représentent chacun une séquence d'hydrocarbure vinylaromatique polymérisé, B représente une séquence, hydrogénée ou non, de diène conjugué polymérisé, X représente le résidu d'un agent de couplage polyfonctionnel, et m représente un nombre entier valant au moins environ 2.

**18.** Composition conforme à la revendication 17, dans laquelle les monomères des séquences A et A' sont choisis indépendamment dans l'ensemble constitué par le styrène, l'alpha-méthylstyrène le vinyl-toluène, le vinyl-xylène et le vinyl-naphtalène, et le monomère de la séquence B est choisi dans

l'ensemble constitué par le butadiène, l'isoprène, le 1,3-pentadiène et le 2,3-diméthylbutadiène.

**19.** Composition conforme à la revendication 18, dans laquelle chaque séquence A et A' présente, indépendamment, une masse moléculaire située dans l'intervalle allant d'environ 2000 à environ 100 000, et chaque séquence B présente une masse moléculaire située dans l'intervalle allant d'environ 25 000 à environ 1 000 000.

**20.** Composition conforme à la revendication 1, qui comporte en outre jusqu'à environ 25 % en poids d'un plastifiant.

**21.** Composition conforme à la revendication 20, dans laquelle le plastifiant est un phosphate aromatique.

**22.** Composition conforme à la revendication 21, dans laquelle le phosphate aromatique est choisi dans l'ensemble constitué par le phosphate de triphényle isopropylé, le phosphate de triphényle isobutylé et le phosphate de triphényle.

**23.** Composition conforme à la revendication 1, qui comporte en outre des fibres de verre en une quantité suffisante pour jouer le rôle de renfort.